# EUROPEAN PATENT SPECIFICATION

(11) **EP 0 827 878 B1**
(45) Date of publication and mention of the grant of the patent: **24.10.2001**
(21) Application number: 97306093.2
(22) Date of filing: 11.08.1997
(51) Int. Cl.: B60R 21/20

(54) **Steering wheel assembly**
Lenkradanordnung
Ensemble de volant

(30) Priority: 10.08.1996 GB 9616852
(43) Date of publication of application: 11.03.1998
(73) Proprietor: BREED AUTOMOTIVE TECHNOLOGY, INC., Lakeland, FL 33807-3050 (US)
(72) Inventor: Edge, Stanley John, Moseley, Birmingham, B13 9QE (GB)
(74) Representative: Croston, David

(56) References cited:
- EP-A- 0 572 125
- DE-U- 9 205 485
- GB-A- 2 270 883
- US-A- 5 650 600

## Description

This invention relates to a steering wheel assembly and is more particularly concerned with a steering wheel assembly incorporating an air bag device and at least one horn-operating switch.

Steering wheel assemblies incorporating air bag devices and horn-operating switches are known in which the air bag device is fixedly mounted in a central region of the steering wheel assembly and the rim thereof. It has also been proposed to provide horn-operating switches in localised areas on a front cover of the air bag device itself. However, the disadvantage of both of the above-described arrangements is that actuation of the horn requires a quite localised region of the steering wheel assembly to be depressed. In an emergency, it is quite common for a driver of the vehicle to fail to actuate the horn because of failure to press the correct localised region. This is obviously undesirable and potentially dangerous.

With a view to mitigating this problem, it has been proposed to provide a steering wheel assembly incorporating a centrally-mounted air bag device which is retained on a steering column-mounting boss of the steering wheel assembly by mounting studs which are designed to permit a small amount of movement of the air bag device relative to the boss. Three horn-operating switches are provided under the air bag device adjacent the lateral periphery of the latter. Helical compression springs extending substantially parallel to the axis of the steering column assembly are provided in the region of each horn-operating switch and serve to bias the air bag device into a position in which electrical contacts mounted for movement with the sir bag device are separated from respective electrical contacts mounted on the boss. With such an assembly, the helical compression springs have to be strong enough to resist movement of the air bag device relative to the remainder of the steering wheel assembly in normal use when a vehicle fitted with the steering wheel assembly is being driven over rough roads, rough terrain, pot holes etc. This is required in order to prevent unwanted actuation of the horn-operating switches and unwanted vibration of the air bag device which can lead to annoying vibration noises. This means that the above-described helical compression springs have been designed to be relatively stiff. The result of this is that the pressure required to actuate the horn is only acceptable if the air bag device is depressed in the general region of one of the horn-operating switches since such action results in compression of the springs associated with only that switch. However if pressure is applied centrally of the air bag device (as is likely to take place in an emergency situation), all of the relatively stiff helical compression springs have to be compressed axially to close the switch contacts. This requires a pressure which is higher than that which is acceptable.

Both EP-A-0572125 and GB-A-2270883 describe a steering wheel assembly in accordance with the preamble of claim 1.

It is an object of the present invention to obviate or mitigate the above disadvantages by providing a steering wheel assembly incorporating an air bag and at least one horn-operating switch which can be more readily actuated.

According to the present invention, there is provided a steering wheel assembly comprising a central body adapted to be attached to a steering column; a steering wheel rim supported by the central body; an air bag device mounted on the central body for limited movement in a first direction towards and away from the latter; at least one horn-operating switch having a first electrical contact fixed relative to the central body and a second electrical contact being moveable by the air bag device into engagement with the first electrical contact; and resilient means resiliently urging the air bag device away from the central body in said first direction into a position in which the first and second electrical contacts of said at least one horn-operating body are separated, characterised in that said resilient means acts on the air bag device in a second direction which is transverse to said first direction, said resilient means having a greater stiffness in said second direction than in said first direction.

The present invention is based on the discovery that the forces tending to cause unwanted movement of the air bag device arising from travel over rough roads etc are essentially vertically-acting forces, ie forces which act transversely of the direction of actuation of the horn-operating switches, such latter direction being substantially parallel to the axis of the steering wheel assembly column axis, the unwanted movement of the air bag device caused by travel over rough roads etc, is largely opposed by flexing of the helical springs rather than compression thereof. Helical compression springs have to possess the requisite stiffness in flexure, with the result that they have an excessive stiffness in compression.

In a preferred embodiment, said resilient means comprise a compression spring associated with the or each horn operating switch, said compression spring being orientated so as to be acted upon in flexure in said first direction. However, instead of using a compression spring, it is with in the scope of the present invention to provide an extension spring or any other type of spring or other resilient means having the specified differential stiffness properties in said first and second directions.

In a particularly convenient embodiment, the air bag device is movably mounted on said central body through at least one damper. The or each damper may comprise a post extending from one of the central body and the air bag device and engaging in a resilient bush fixed relative to the other of the central body and the air bag device.

An embodiment of the present invention will now be described, by way of example, with reference to the accompanying drawings, in which:
Fig 1 is a front view of a steering wheel assembly according to the present invention showing some underlying parts normally hidden from view;
Fig 2 is an axial section through the steering wheel assembly of Fig 1; and
Figs 3a and 3b are sectional views showing a damper forming part of the assembly of Figs 1 and 2.

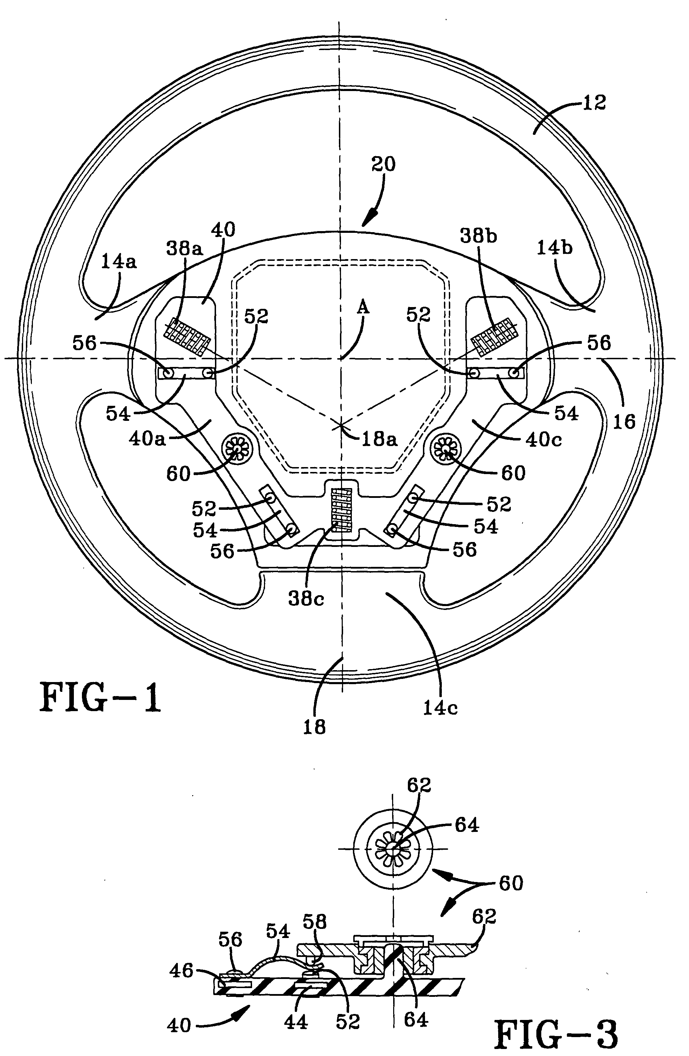

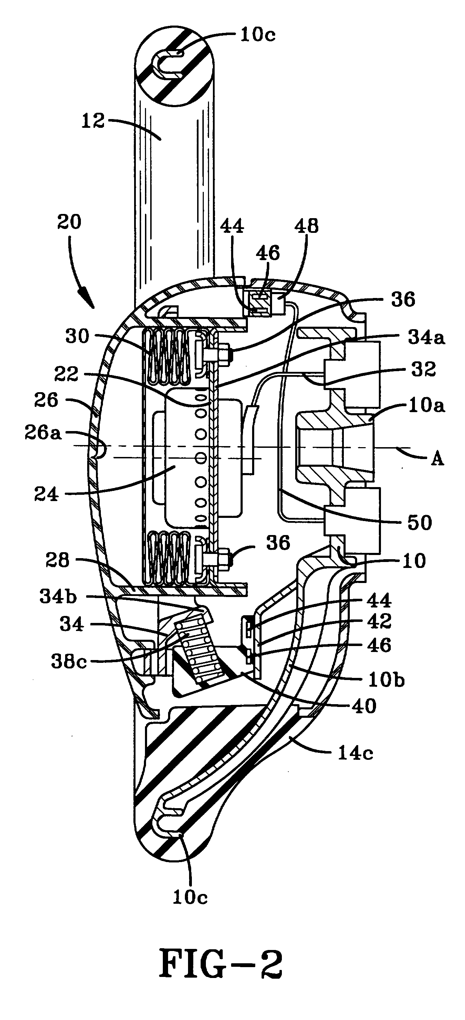

Referring now to the drawings, the steering wheel assembly comprises a central metal body 10 including a collar 10a by means of which the assembly is secured to the upper end of a steering column (not shown) of an automobile. The axis of rotation of the steering column and the steering wheel assembly is indicated by line A (Fig 2). The central body 10 has outwardly extending arm 10b (only one shown in Fig 2) supporting an annular core 10c. The annular core 10c and outer ends of arm 10b are embedded in a resilient plastics molding defining steering wheel rim 12 and steering wheel spokes 14a and 14b and 14c (see Fig 1). The spokes 14a and 14b are disposed on opposite sides of the central body 10 at the level of horizontal median plane 16 with respect to the axis A of the steering wheel assembly, whilst the spoke 14c is disposed at the lowermost part of the steering wheel assembly on vertical median plane 18 thereof.

The steering wheel assembly further comprises an air bag device indicated generally by arrow 20 and including a base plate 22 supporting a gas generator 24 and a plastics molding defining a front cover 26 and an internal peripheral wall 28. A flexible air bag 30 is disposed within the space defined by the front cover 26 and an internal peripheral wall 28. A flexible air bag 30 is disposed within the space defined by the front cover 26 wall 28 and base plate 22, and is deployable through the front cover 26 in a manner known per se when the gas generator 24 has been activated by an electrical signal passed though lead 32. The manner in which the air bag 30 is deployed is per se well known and will not be described in any further detail except to say that, when the gas generator 24 is activated, the expanding gas inflates the air bag 30 which is deployed through the front cover 26. The front cover 26 is weakened along line 26a to permit it to split open along such line.

The air bag device 20 is carried by a metal support plate 34 having a planar region 34a bolted to the underside of the base plate 32 by means of bolts 36 which also serve to secure the air bag 30 in sealed relationship against the base plate 22.

The support plate 34 also includes an outer region 34b which is configurated to define recesses aligned with the spokes 14a, 14b and 14c. Each of these recesses receives the inner end of a respective helical compression spring 38a, 38b, 38c whose outer end is disposed on a respective recess formed in a generally V-shaped electrically insulating molding 40. The molding 40 is supported on respective brackets 42 (only one shown) extending from the roots of the respective arms 10b of the central body 10.

The helical compression springs 38a and 38b are disposed just above the horizontal median plane 16 and are mutually inclined so that their axes of compression intersect at a location 18a on the vertical median plane 18 which is approximately half way between the axis A and the inner end of the helical compression spring 38c (see Fig 1). The compression axis of the helical compression spring 38c extends in the vertical median plane 18. However, as can be seen from Fig 2, the compression axis of the spring 38c lies further forward (ie nearer to front cover 26) than the outer end thereof. The inner and outer ends of the springs 38a and 38b are similarly located, although this is not shown in Fig 3 because of the section taken.

Although not shown in the drawings, a pair of headed studs are secured to the central body 10 and extend forwardly of the steering wheel assembly. The headed studs engage in respective recesses (also not shown) in the plate 34 such that the plate 34 is slidable on the studs in a first direction which is parallel to the axis 40. The studs are spaced apart on opposite sides of the axis A and extend in the horizontal median plane 16. The heads of the studs serve to limit outward movement of the support plate 34 and thereby limit outward movement of the air bag device 20 but permit inward movement of the air bag device 20 towards the central metal body 10.

The molding 40 includes regions 40a which lie between and interconnect the regions of the molding 40 which are recessed to receive the respective springs 38a to 38c. The molding 40 has a pair of embedded electrically conducting strips 44 and 46 which are connected with a horn relay (not shown) via a connector 48 and lead 50. Four fixed studs 52 are connected with the strip 44 such that one of the contact studs 52 is disposed adjacent each of the springs 38a and 38b, whilst the remaining two contact studs 52 are disposed on opposite sides of the spring 38c. Each contact stud 52 is provided on the molding 40 (Fig 3). Associated with each contact stud 52 is a resilient movable contact arm 54 which is electrically connected with the strip 46 via a respective stud 56. Each movable contact arm 54 is inherently biased into a position in which it is spaced a short distance from the respective contact stud 52. Each contact arm 54 is movable into engagement with its respective contact stud 52 by means of a respective projection 58 on the support of the air bag device 20.

The support plate 34 is provided with a pair of dampers 60, each being disposed approximately mid-way between the spring 38a and 38b. Each damper 60 comprises a rubber bush 62 which is friction fitted over a post 64 integrally molded so as to project from the molding 40. Each rubber bush 62 has a series of recesses extending radially outwardly from its inner wall so that there is a certain amount of resilience in a direction laterally of each post 64.

It will be appreciated from the above that movement of the air bag body 20 towards the central body 10 in order to close one or more of the respective pairs of contacts 52 and 54 entails mainly flexing movement of one or more of the helical compression springs 38a to 38c with no or scarcely any axial compression thereof. Thus, the force required to operate the horn is much less that would otherwise be case if the same compression springs 38a to 38c were located with their axes of compression parallel to the axis A.

With the steering wheel in the "straight ahead" position as illustrated in Figs 1 and 2, it will be understood that shock loadings acting on the air bag device 20 as a result of driving on rough roads etc are mainly substantially vertical forces acting substantially parallel to the compression axis of the spring 38c. The stiffness of the spring 38c along its compression axis is much greater than its stiffness to flexure. Additionally, the inclinations of the springs 38a and 38b are such that these shock loadings applied to the air bag device 20 are absorbed by a certain amount of axial compression of such springs as well as flexure. However, such springs 38a and 38b may be orientated to act in compression under shock loads when the steering wheel assembly is other than in the "straight ahead" position, for example when negotiating a corner or bend. The dampers 60 also serve to damp out unwanted vibrations which would otherwise be imparted to the air bag assembly 20 in use.

It is to be appreciated that the damping effect of the dampers 60 can be selected as required by appropriate selection of the hardness of the rubber bushes 62. Such an arrangement obviates the need to insert a large mass into the air bag device to mitigate the vibration problem.

## Claims

1. A steering wheel assembly comprising a central body (10) adapted to be attached to a steering column; a steering wheel rim (12) supported by the central body (10); an air bag device (20) mounted on the central body (10) for limited movement in a first direction towards and away from the latter; at least one horn-operating switch having a first electrical contact (52) fixed relative to the central body (10) and a second electrical contact (54) mounted for movement relative to the first electrical contact (52), said second electrical contact (54) being moveable by the air bag device (20) into engagement with the first electrical contact (52); and resilient means (38a, 38b, 38c) resiliently urging the air bag device (20) away from the central body (10) in the first direction in which the first and second electrical contacts (52,54) of the at least one horn-operating body are separated, **characterised in that** the resilient means (38a, 38b, 38c) acts on the air bag device (20) in a second direction which is transverse to the first direction the resilient means (38a, 38b, 38c) having a greater stiffness in the second direction than in the first direction.

2. A steering wheel assembly according to claim 1 in which the resilient means (38a, 38b, 38c) comprises a compression spring (38a, 38b, 38c) associated with the or each horn-operating switch, the compression spring being orientated so as to be acted upon in flexure in the first direction.

3. A steering wheel assembly according to any preceding claim in which the resilient means (38a, 38b, 38c) comprises a helical spring (38a, 38b, 38c).

4. A steering wheel assembly according to any preceding claim in which the resilient means (38a, 38b, 38c) comprises first, second and third helical compression springs (38a, 38b, 38c).

5. A steering wheel assembly according to claim 4 in which the helical compression springs (38a, 38b, 38c) are radially spaced from the axis of rotation (A) of the wheel.

6. A steering wheel assembly according to claim 5 in which the first and second helical compression springs (38a, 38b) are disposed just above the horizontal median plane (16) of the wheel (10), one each side of the axis of rotation (A) of the wheel.

7. A steering wheel assembly according to claim 5 or 6 in which the third helical compression spring (38c) is disposed beneath the horizontal median plane (16), the compression axis of the spring (38c) lying on the vertical median plane (18).

8. A steering wheel assembly according to claim 7 when dependent upon claim 6 in which the compression axes of the first and second compression springs (38a, 38b) are mutually inclined so that the compression axes intersect at a position on the vertical median plane (18) approximately half way between the axis of rotation (A) of the wheel and the inner end of the third compression spring (38c).

9. A steering wheel assembly according to any of claims 4 to 8 in which the compression axis of the third spring (38c) is inclined at approximately 80° relative to the axis of rotation (A) of the wheel.

10. A steering wheel assembly according to any of claims 4 to 9 in which the respective inner ends of the compression springs (38a, 38b, 38c) lie further away from the central body (10) than their respective outer ends.

11. A steering wheel assembly according to any preceding claim in which the air bag device (20) is movably mounted on the central body (10) through at least one damper (60).

12. A steering wheel assembly according to claim 11 in which the or each damper (60) comprises a post (64) extending from one of the central body (1) and the air bag device (20) and engaging in a resilient bush (62) fixed relative to the other of the central body (10) and the air bag device (20).

13. A steering wheel assembly according to claim 11 or 12 in which two such dampers (60) are provided.

14. A steering wheel assembly according to claim 12 in which each bush (62) has a plurality of recesses extending radially outwardly from the inner wall thereof to reduce the resistance to deformation laterally of the bush (62).

## Patentansprüche

1. Lenkradanordnung, die folgendes aufweist: einen Mittelteil (10), der an einer Lenksäule angebracht werden kann; einen Lenkradkranz (12), der durch den Mittelteil (10) getragen wird; eine Airbag-Einheit (20), die auf dem Mittelteil (10) zur begrenzten Bewegung in einer ersten Richtung zu diesem hin und von diesem weg angebracht ist; wenigstens einen Schalter zur Hupenbetätigung, der einen ersten elektrischen Kontakt (52), der im Verhältnis zum Mittelteil (10) feststeht, und einen zweiten elektrischen Kontakt (54) hat, der für die Bewegung im Verhältnis zum ersten elektrischen Kontakt (52) angebracht ist, wobei der zweite elektrische Kontakt (54) durch die Airbag-Einheit (20) zum Eingriff mit dem ersten elektrischen Kontakt (52) bewegt werden kann; und elastische Mittel (38a, 38b, 38c), welche die Airbag-Einheit (20) vom Mittelteil (10) weg in der ersten Richtung drücken, in der die ersten und zweiten elektrischen Kontakte (52, 54) des wenigstens einen Schalters zur Hupenbetätigung getrennt sind, **dadurch gekennzeichnet, daß** die elastischen Mittel (38a, 38b, 38c) auf die Airbag-Einheit (20) in einer zweiten Richtung wirken, die quer zu der ersten Richtung verläuft, wobei die elastischen Mittel (38a, 38b, 38c) in der zweiten Richtung eine größere Steifigkeit als in der ersten Richtung haben.

2. Lenkradanordnung nach Anspruch 1, bei der die elastischen Mittel (38a, 38b, 38c) eine Druckfeder (38a, 38b, 38c) umfassen, die dem oder jedem Schalter zur Hupenbetätigung zugeordnet ist, wobei die Druckfeder so ausgerichtet ist, daß die Einwirkung auf sie durch Biegen in der ersten Richtung erfolgt.

3. Lenkradanordnung nach einem der vorhergehenden Ansprüche, bei der die elastischen Mittel (38a, 38b, 38c) eine zylindrische Schraubenfeder (38a, 38b, 38c) umfassen.

4. Lenkradanordnung nach einem der vorhergehenden Ansprüche, bei der die elastischen Mittel (38a, 38b, 38c) erste, zweite und dritte zylindrische Schraubendruckfedern (38a, 38b, 38c) umfassen.

5. Lenkradanordnung nach Anspruch 4, bei der die zylindrischen Schraubendruckfedern (38a, 38b, 38c) in Radialrichtung mit Zwischenraum zur Rotationsachse (A) des Lenkrads angeordnet sind.

6. Lenkradanordnung nach Anspruch 5, bei der die erste und zweite zylindrische Schraubendruckfeder (38a, 38b) unmittelbar über der waagerechten Mittelebene (16) des Lenkrads (10) angeordnet sind, jeweils eine auf jeder Seite der Rotationsachse (A) des Lenkrads.

7. Lenkradanordnung nach Anspruch 5 oder 6, bei der die dritte zylindrische Schraubendruckfeder (38c) unter der waagerechten Mittelebene (16) angeordnet ist, wobei die Druckachse der Feder (38c) auf der senkrechten Mittelebene (18) liegt.

8. Lenkradanordnung nach Anspruch 7 in Abhängigkeit von Anspruch 6, bei der die Druckachsen der ersten und zweiten Druckfedern (38a, 38b) zueinander geneigt sind, so daß sich die Druckachsen an einer Position auf der senkrechten Mittelebene (18) etwa auf halbem Weg zwischen der Rotationsachse (A) des Lenkrads und dem inneren Ende der dritten Druckfeder (38c) schneiden.

9. Lenkradanordnung nach einem der Ansprüche 4 bis 8, bei der die Druckachse der dritten Feder (38c) um etwa 80° im Verhältnis zur Rotationsachse (A) des Lenkrads geneigt ist.

10. Lenkradanordnung nach einem der Ansprüche 4 bis 9, bei der die jeweiligen inneren Enden der Druckfedern (38a, 39b, 38c) weiter vom Mittelteil (10) entfernt sind als ihre jeweiligen äußeren Enden.

11. Lenkradanordnung nach einem der vorhergehenden Ansprüche, bei der die Airbag-Einheit (20) mit Hilfe von wenigstens einem Dämpfungsglied (60) beweglich auf dem Mittelteil (10) angebracht ist.

12. Lenkradanordnung nach Anspruch 11, bei der das oder jedes Dämpfungsglied (60) eine Stütze (64) aufweist, die von einer der Komponenten Mittelteil (10) und Airbag-Einheit (20) ausgeht und in eine elastische Hülse (62) eingreift, die im Verhältnis zu der anderen der Komponenten Mittelteil (10) und Airbag-Einheit (20) feststeht.

13. Lenkradanordnung nach Anspruch 11 oder 12, bei der zwei solche Dämpfungsglieder (60) bereitgestellt werden.

14. Lenkradanordnung nach Anspruch 12, bei der jede Hülse (62) eine Vielzahl von Aussparungen hat, die von deren Innenwand in Radialrichtung nach außen verlaufen, um den Widerstand gegen Verformung seitlich der Hülse (62) zu verringern.

## Revendications

1. Assemblage de volant comprenant un corps central (10) destiné à être fixé à une colonne de direction; une jante du volant (12) supportée par le corps central (10); un dispositif de coussin d'air (coussin gonflable) (20) monté sur le corps central (10) de sorte à pouvoir effectuer un déplacement limité dans une première direction le rapprochant et l'écartant de ce dernier; au moins un interrupteur d'actionnement du klaxon comportant un premier contact électrique (52) fixe par rapport au corps central (10) et un deuxième contact électrique (54) monté de sorte à pouvoir se déplacer par rapport au premier contact électrique (52), ledit deuxième contact électrique (54) pouvant être déplacé par le dispositif de coussin d'air (20) en vue de son engagement dans le premier contact électrique (52); et un moyen élastique (38a, 38b, 38c), poussant élastiquement le dispositif de coussin d'air (20) à l'écart du corps central (10) dans la première direction, dans une position dans laquelle les premier et deuxième contacts électriques (52, 54) du au moins un corps d'actionnement du klaxon sont séparés, **caractérisé en ce que** le moyen élastique (38a, 38b, 38c) agit sur le dispositif de coussin d'air (20) dans une deuxième direction, transversale par rapport à la première direction, le moyen élastique (38a, 38b, 38c) ayant une rigidité plus grande dans la deuxième direction que dans la première direction.

2. Assemblage de volant selon la revendication 1, dans lequel le moyen élastique (38a, 38b, 38c) comprend un ressort de compression (38a, 38b, 38c) associé au ou à chaque interrupteur d'actionnement du klaxon, le ressort de compression étant orienté de sorte à être soumis à une flexion dans la première direction.

3. Assemblage de volant selon l'une quelconque des revendications précédentes, dans lequel le moyen élastique (38a, 38b, 38c) comprend un ressort hélicoïdal (38a, 38b, 38c).

4. Assemblage de volant selon l'une quelconque des revendications précédentes, dans lequel le moyen élastique (38a, 38b, 38c) comprend des premier, deuxième et troisième ressorts de compression hélicoïdaux (38a, 38b, 38c).

5. Assemblage de volant selon la revendication 4, dans lequel les ressorts de compression hélicoïdaux (38a, 38b, 38c) sont espacés radialement de l'axe de rotation (A) du volant.

6. Assemblage de volant selon la revendication 5, dans lequel les premier et deuxième ressorts de compression hélicoïdaux (38a, 38b) sont agencés juste au-dessus du plan médian horizontal (16) du volant (10), un de chaque côté de l'axe de rotation (A) du volant.

7. Assemblage de volant selon les revendications 5 ou 6 dans lequel le troisième ressort de compression hélicoïdal (38c) est agencé au-dessous du plan médian horizontal (16), l'axe de compression du ressort (38c) étant situé sur le plan médian vertical (18).

8. Assemblage de volant selon la revendication 7, dépendant de la revendication 6, dans lequel les axes de compression des premier et deuxième ressorts de compression (38a, 38b) sont mutuellement inclinés, de sorte que les axes de compression se coupent au niveau d'une position sur le plan médian vertical (18), à peu près à mi-chemin entre l'axe de rotation (A) du volant et l'extrémité interne du troisième ressort de compression (38c).

9. Assemblage de volant selon l'une quelconque des revendications 4 à 8, dans lequel l'axe de compression du troisième ressort (38c) est incliné d'environ 80° par rapport à l'axe de rotation (A) du volant.

10. Assemblage de volant selon l'une quelconque des revendications 4 à 9, dans lequel les extrémités internes respectives des ressorts de compression (38a, 38b, 38c) sont davantage espacés du corps central (10) que leurs extrémités externes respectives.

11. Assemblage de volant selon l'une quelconque des revendications précédentes, dans lequel le dispositif de coussin d'air (20) est monté de manière mobile sur le corps central (10) par l'intermédiaire d'au moins un amortisseur (60).

12. Assemblage de volant selon la revendication 11, dans lequel le ou chaque amortisseur (60) comprend un montant (64) s'étendant à partir d'un élément, le corps central (1) ou le dispositif de coussin d'air (20) et s'engage dans une douille élastique (62) fixée à l'autre élément, le corps central (10) ou le dispositif de coussin d'air (20).

13. Assemblage de volant selon les revendications 11 ou 12, comportant deux amortisseurs (60) de ce type.

14. Assemblage de volant selon la revendication 12, dans lequel chaque douille (62) comporte plusieurs évidements s'étendant radialement vers l'extérieur à partir de la paroi interne correspondante pour réduire la résistance à la déformation dans une direction latérale par rapport à la douille (62).
